# EUROPEAN PATENT SPECIFICATION

(11) **EP 4 323 263 B1**
(45) Date of publication and mention of the grant of the patent: **08.10.2025**
(21) Application number: 22788558.9
(22) Date of filing: 08.04.2022
(51) Int. Cl.: B62J 9/30, B62J 9/27, B62J 9/24, B62J 9/23, B62J 7/08, E05C 19/14

(54) **MOTORCYCLE CASE AND A LOCKING SYSTEM FOR THE SAME**
MOTORRADKOFFER UND VERRIEGELUNGSSYSTEM DAFÜR
COFFRE DE MOTOCYCLETTE ET SYSTÈME DE VERROUILLAGE POUR CELUI-CI

(30) Priority: 12.04.2021 SG 10202103721Y
(43) Date of publication of application: 21.02.2024
(73) Proprietor: Lim, Sau Leong, Singapore 218204 (SG)
(72) Inventor: Lim, Sau Leong, Singapore 218204 (SG)
(74) Representative: HGF
(86) International application number: PCT/SG2022/050207
(87) International publication number: WO 2022/220744

(56) References cited:
- CN-A- 107 489 316
- CN-U- 211 001 658
- KR-B1- 101 449 302
- US-A1- 2013 168 427
- US-B1- 6 481 605
- ANONYMOUS: "MOUNTING INSTRUCTIONS - TRAX ADVENTURE ALU-BOX", SW-MOTECH, 10 February 2021 (2021-02-10), pages 1, 3, 5 - 6, XP093000705, [retrieved on 20221122]
- ADVMOTO: "SW-Motech TraX ADVENTURE Hard Luggage/Cases Review", YOUTUBE, XP093000706, Retrieved from the Internet <URL:https://www.youtube.com/watch?v=Trpgef9Fz30> [retrieved on 20221122]

## Description

### FIELD OF THE INVENTION

The present invention relates to a motorcycle case and a locking system to enable the motorcycle case to be easily detachable from a motorcycle.

### BACKGROUND ART KNOWN TO THE APPLICANT

For the avoidance of doubt, in this specification, the term motorcycle is intended to also include two wheeled motorised vehicles known as scooters and mopeds. Irrespective of the type of motorcycle, be it a conventional two wheeled vehicle with or without a sidecar, a trike, or a quadbike, a requirement exists for many users of such vehicles for some form of weatherproof storage facility mounted to or mountable to the vehicle. Usually, such storage facilities are lockable and typically in the form of a single top mountable motorcycle case, or a pair of side mountable motorcycle cases. For other types of motorcycle, the motorcycle case per se, may be an integral part of the vehicle.

Although mountable motorcycle cases can be demounted, this process is not easy, and not intended, essentially for two reasons. The first is that a rider wants to be assured that once mounted, the motorcycle case is unlikely to come loose and 'drop off' when the motorcycle is being ridden, especially as motorcycle cases are usually mounted behind the rider and not usually seen when the motorcycle is being used. The second is to prevent a third party from rapidly demounting the motorcycle case from the motorcycle and walking off with it and its contents if the owner of the motorcycle is away from the motorcycle for any length of time.

This, at times, can be inconvenient, as on occasion, a rider may need to leave their motorcycle and if they are worried about the contents of their motorcycle box being stolen while they are away from the vehicle, the only real option that they have is to open the motorcycle case and bring the contents with them. In addition, motorcycle cases are provided with key operable locks, requiring a key to either lock or unlock the motorcycle case. Without the use of the key, the motorcycle case is either always open or always closed. US patent application US 2013/0168427 to Givi S.R.L. Unipersonale describes an opening/closing and hooking/releasing system of a suitcase for motorcycles. Said US 2013/0168427 discloses a motorcycle case according to the preamble of claim 1.

It is an object of the present invention to try and alleviate the aforementioned problems.

### STATEMENTS OF THE INVENTION

With the foregoing in view, the invention, although embodied in several different aspects, is so linked as to form part of a single general inventive concept. The scope of the claimed invention is defined by the appended claims.

Accordingly, the invention in one aspect resides broadly in a motorcycle case comprising:
a container including a base having one or more walls upwardly extending therefrom, which terminate in an open top;
a container lid to close the open top of the container, the lid being moveable from a closed to an open position; and
a plurality of locks,
   at least one lock of the plurality of locks to lock the container lid in the closed position, to the container; and
   at least one lock of the plurality of locks configured to operatively connect the motorcycle case to a motorcycle wherein at least one lock of the plurality of locks comprises:
      a housing adapted to support the following components:
      a latch adapted to move from a first position to a second position, when a latch actuator is used to actuate the latch;
      a first member provided with biasing means, the first member able to move from a first position to a second position, whereby potential energy is stored by the biasing means during movement of the first member from the first position to the second position;
      a second member provided with biasing means, the second member able to move from a first position to a second position, whereby potential energy is stored by the biasing means when the second member is in the first position, and at least some of that stored potential energy is released as kinetic energy during movement of the second member from the first position to the second position;
      their arrangement being such that:
         the latch, when in the first position, is able to restrict movement of the first member, and when in the second position, movement of the first member is no longer restricted; characterised in that movement of the first member from the first position to the second position enables the second member to move from its first position to its second position and once in its second position, the second member locks the first member in its second position.

With such an arrangement, all a motorcycle rider needs to do is unlock the or each lock operatively connecting the motorcycle case to the motorcycle, and they will be able to walk away with the motorcycle case without the need to open the case and remove its contents if they are going to be away from the motorcycle for any length of time.

Preferably, each lock comprises a pair of complementary engaging members, the first complementary engaging member of a pair, being operatively connected to the container, and the second complementary engaging member of a pair, being fitted to either the container lid, or directly or indirectly to, a motorcycle. This has the advantage that unlocking the or each lock that secures the container to the motorcycle, enables the motorcycle case to be demounted from a motorcycle rapidly, without unlocking the motorcycle case.

Although each lock could be an electronically actuable lock, preferably, each lock is actuable by a physical key, the latch being fitted to a key operable cylinder; and the latch actuator is the physical key, the latch being adapted to move from the first position to the second position, when the key is inserted into the key operable cylinder and rotated about the longitudinal axis of the key operable cylinder.

Preferably, the latch is located within the housing throughout its movement from its first to its second position. This is advantageous, as it prevents weathering of the latch, and limits the amount of ingress of fluid (e.g. rainwater) into the lock.

Preferably, the housing comprises two parts, a first part, housing some of the components, and a second part, housing the remainder of the components, the arrangement between the two parts of the housing being such, that only one part of the housing moves relative to the other during engagement and disengagement of the pair of complementary engaging members of the lock.

Preferably, one of the parts of the housing is fitted with a first pivot which is operatively connected to a second pivot fitted to the other part of the housing via respective ends of a connecting arm, such that rotation of one end of the connecting arm about the first pivot, causes the second pivot at the other end of the connecting arm to revolve around the first pivot to separate the housing into its two parts during disengagement of the pair of complementary engaging members. The part of the housing fitted with the second pivot, is free to rotate about that second pivot when disengagement of the pair of complementary engaging members has taken place. In such form, the part of the housing fitted with the first pivot, is that part of the housing that is not able to move relative to the other during engagement and disengagement of the pair of complementary engaging members of the lock. Again, in such form, the first complementary engaging member of a pair, is fitted to the part of the housing that moves relative to the other during engagement and disengagement of the pair of complementary engaging members of the lock to the container.

Preferably, the first member is located in that part of the housing that is not able to move. In such form, the part of the housing that is able to move relative to the part of the housing that is not able to move, and the first member, are each provided with a complementary interlocking catch, able to lock both parts of the housing together, preferably, when the pair of complementary engaging members of the lock are engaged. Again, in such form, movement of the first member from its first position to its second position will disengage the interlocking catch, enabling the part of the housing that is able to move relative to the part of the housing that is not able to move, to move. With such an arrangement, even if the motorcycle case is unlocked via the latch actuator, the motorcycle case cannot be opened until the first member is moved from its first position to its second position.

Preferably, the second member is located in that part of the housing that is not able to move. In such form, movement of the first member is in a direction orthogonal to the direction of movement of the second member. This has the advantage of assisting both parts of the housing to break apart when the first member moves from its first to its second position.

With respect to at least one lock, preferably, both of the parts of the housing are connected together via a first pivot, and a second pivot is connected to that part of the housing that is able to move relative to the other, during engagement and disengagement of the pair of complementary engaging members.

The respective arrangement of the pivots is such that rotation about the first pivot of the part of the housing that is able to move relative to the other, causes the second pivot to revolve around the first pivot to separate the housing into its two parts during disengagement of the pair of complementary engaging members. In such form, the first complementary engaging member of a pair, is fitted to that part of the housing that is able to move relative to the other via the second pivot. Again in such form, the first complementary engaging member of a pair is free to rotate about the second pivot when the pair of complementary engaging members are disengaged.

Preferably, each lock in the plurality of locks comprises the same components. In such form, the or each lock that operatively connects the motorcycle case to the motorcycle case base plate is visually different to the or each lock that locks the container lid in the closed position, to the container. Having locks that comprise the same components, but which are visually different, enable the number of different parts for each type of lock to be kept to a minimum.

The invention in a second aspect, resides broadly in a locking system, comprising:
a motorcycle case base plate mountable to a motorcycle; and
a motorcycle case as specified herein above.

Preferably, in the locking system, the motorcycle case and the base plate are each provided with complementary interlocking members to enable the motorcycle case to be fitted to the base plate. In such form, it is preferable if the interlocking members interlock via a sliding action, as this ensures that the only way the motorcycle case can come loose from the motorcycle case base plate, is by sliding in the opposite direction. Again, in such form, the or each lock which operatively connects the motorcycle case to a motorcycle, does so, by locking the motorcycle case to the motorcycle case base plate, the latter having been fitted to the motorcycle. This arrangement will prevent any such sliding action in a direction that will unlock the motorcycle case from the motorcycle case base plate.

Preferably, in the locking system, each lock comprises a pair of complementary engaging members, the first complementary engaging member of a pair, being fitted to the container, and the second complementary engaging member of a pair, being fitted to either the container lid, or to the motorcycle base plate.

### BRIEF DESCRIPTION OF THE DRAWINGS

In order that the invention may be more readily understood and put into practical effect, reference will now be made to the accompanying sheets of drawings wherein:
Fig 1 illustrates a front (Fig 1a), a side (Fig 1b) and an isometric view (Fig 1c) of a locking system for a motorcycle case according to one embodiment of the invention, and shows a motorcycle case base plate, securely mounted to a motorcycle's base plate receiving frame, together with a motorcycle case of the present invention fitted to the base plate and locked onto it;

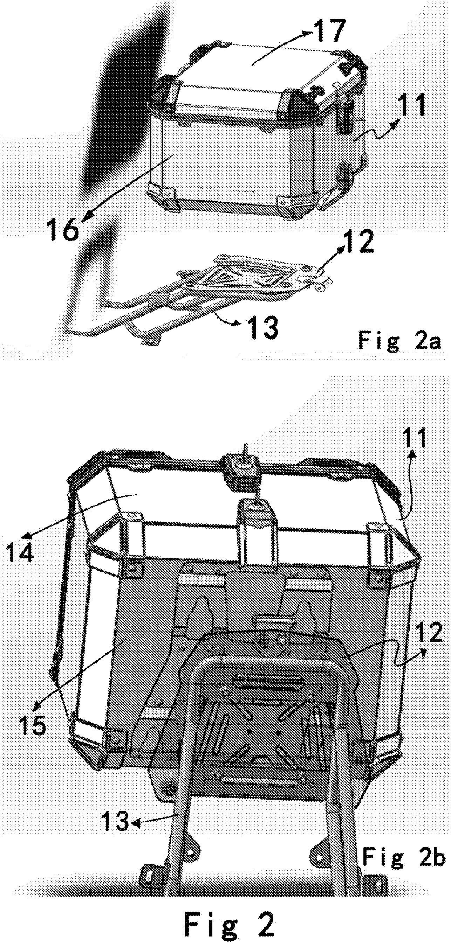

Fig 2 illustrates an isometric generally side (Fig 2a) and underside (Fig 2b) views of the locking system for the motorcycle case shown in Fig 1, with the motorcycle case separated from the motorcycle case base plate, but with the base plate still securely fitted to the receiving frame of the motorcycle;

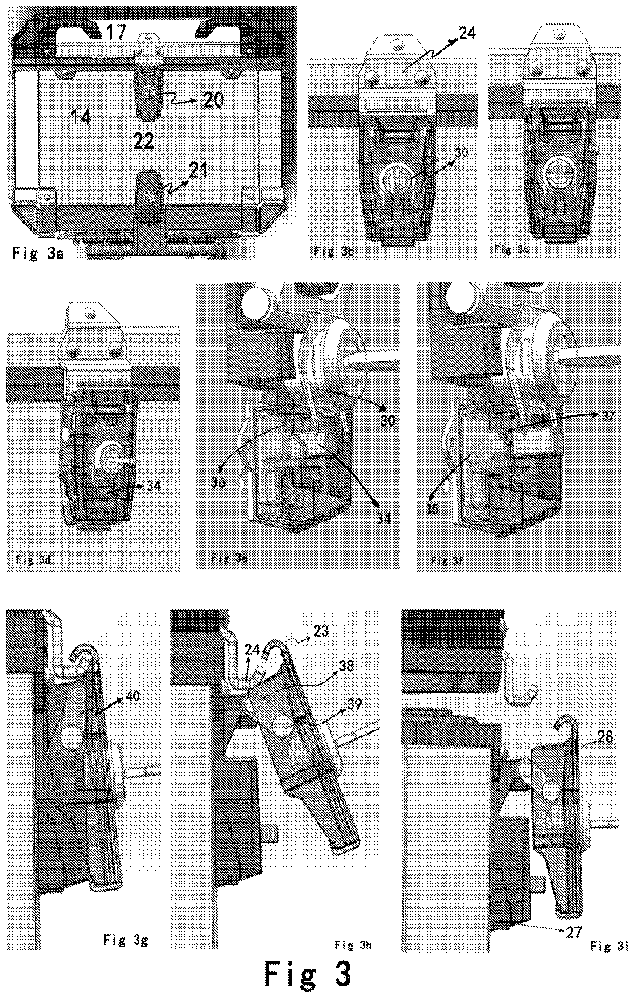

Fig 3 illustrates a front view (Fig 3a) of the locking system for the motorcycle case shown in Figs 1 and 2, followed by various views (Fig 3b-i) (some in part section) of the top key operated lock in various stages of unlocking;

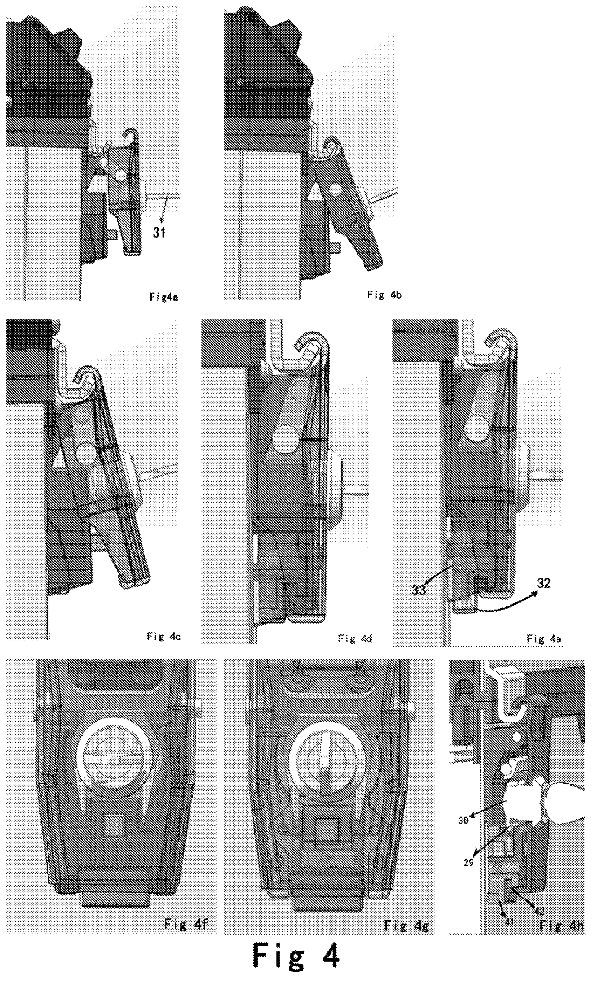

Fig 4 illustrates various side (Fig 4a-e) and front (Fig 4f-g) views, together with an isometric (Fig 4h) sectional view of the top key operated lock shown in Fig 3 in various stages of locking;

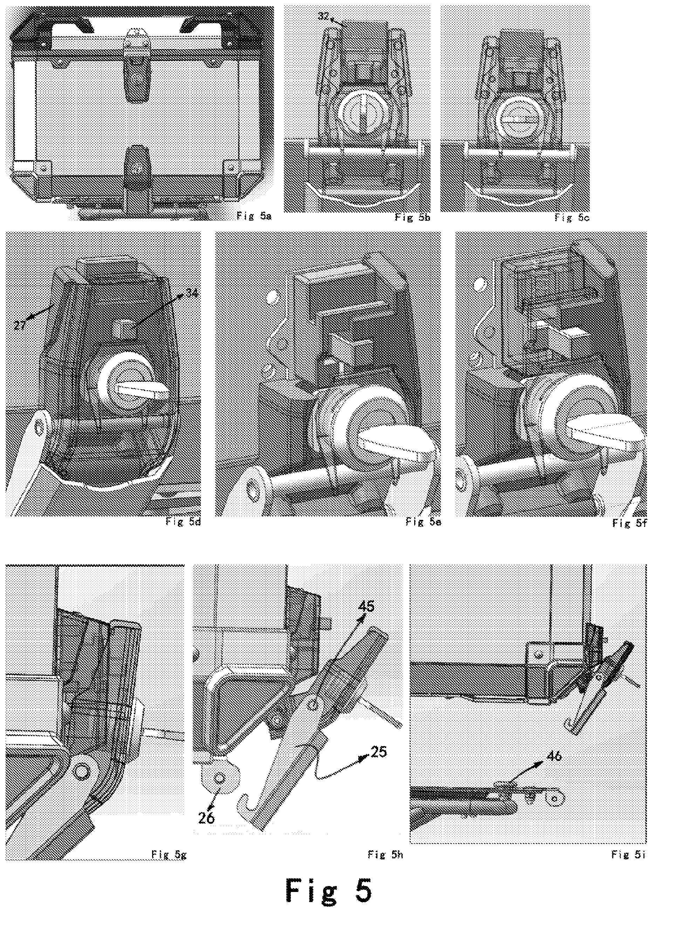

Fig 5 illustrates a front elevation (Fig 5a) of the locking system for the motorcycle case shown in Figs 1 and 2, followed by various views (Fig 5b-i) (some in part section) of the bottom key operated lock in various stages of unlocking;

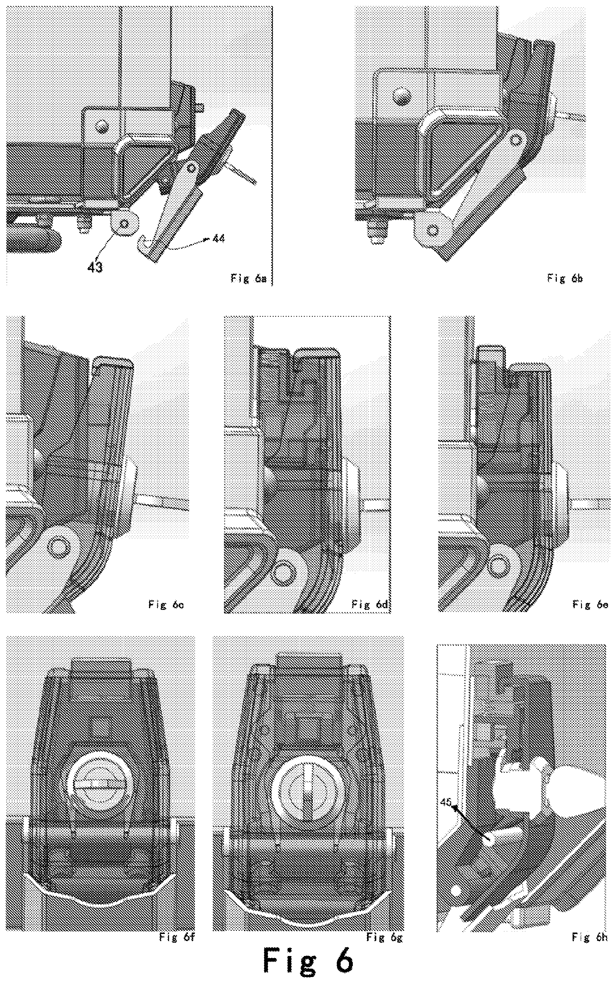

Fig 6 illustrates various side (Fig 6a-e) and front (Fig 6f-g), views, together with an isometric (Fig 6h) sectional view of the bottom key operated lock shown in Fig 5 in various stages of locking;

### DESCRIPTION OF THE PREFERRED EMBODIMENT

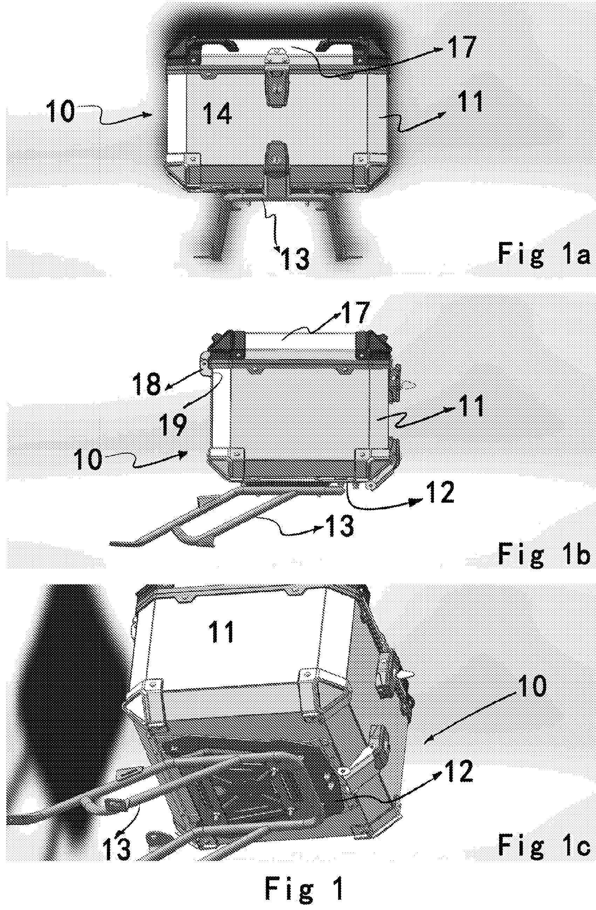

Figs 1a-c show various views of one embodiment of a locking system 11, 12 for a motorcycle case 11 of the present invention and is generally referenced 10.

The locking system 11, 12 shows a motorcycle case base plate 12, securely mounted to a motorcycle's base plate receiving frame 13, together with a motorcycle case 11 fitted to the base plate 12 and locked onto it.

The stainless steel four sided motorcycle case 11, is in the form of an open topped container 14 having a base 15 with four walls 16 and a container lid 17 to cover the open top of the container 14, the container lid 17 being connected to the container 14, via a hinge 18 along the rearward edge 19 of the container 14, enabling the lid 17 (when unlocked) to be moved from a closed to an open position. The motorcycle case 11 is fitted with two locks 20, 21, each fitted one below the other, midway between opposing sides of the front face 22 of the motorcycle case 11, the upper lock 20 to lock the container lid 17 in the closed position, to the container 14, and the lower lock 21, to lock the motorcycle case 11 to the motorcycle case base plate 12.

Each lock 20, 21 includes a pair of complementary engaging members, 23, 24 (lock 20); 25, 26 (lock 21), the first complementary engaging member of a pair, 23, 25 being fitted to each lock 20, 21, and the second complementary engaging member of a pair, 24, 26 being fitted to either the container lid 17, (in the case of the upper lock 20) or to the motorcycle base plate 12 (in the case of the lower lock 21).

The internal arrangement of each lock 20, 21 will now be described. Each lock 20, 21 comprises a housing 27, 28 adapted to support the following component parts. The first, is a latch 29 rotatably mounted to a steel cylinder 30 actuated by a key 31. The latch 29 can move from a first position to a second position, when the key 31 is inserted into the cylinder 30 and rotated about the longitudinal axis of the cylinder 30.

The next component is a push operable elongate first member 32, molded from plastics material which has associated with it, a biasing means in the form of a helical steel spring 33. The first member 32 is located below the cylinder 30, and the principal axis of the first member 32, passes through the orthogonal principal axis of the cylinder 30, the first member 32 being able to move from a first position to a second position, in a vertical direction (when the motorcycle case 11 is in its intended attitude of operation).

During such movement, potential energy is stored by the helical spring 33 when the first member 32 moves from the first position to the second position. A second member 34 also molded from plastics material which is also elongate and 'T' shaped, is also provided with a biasing means again, in the form of a helical steel spring 35, the second member 34 also being able to move from a first position to a second position, this movement being in a horizontal with respect to the front face of the container 14. When this movement occurs, potential energy stored by the helical spring 33 when the second member 34 is in the first position, is released, at least in part, as kinetic energy, as the second member 34 moves to the second position.

The arrangement of each of these components is such that the latch 29, when it is in the first position, is able to restrict movement of the first member 32, as the latch 29 is located directly above the first member 32, and when the latch 29 has been rotated around to its second position by rotation of the key 31, in the cylinder 30, movement of the first member 32 in a vertical direction is now no longer restricted.

From the figures it is clear that movement of the latch 29 from its first to its second position occurs completely within the housing 27, 28. In addition, movement of the first member 32 from the first position to the second position enables the second member 34 to move from its first position to its second position and once in its second position, the second member 34 locks the first member 32 in its second position.

This latter arrangement is possible because the first member 32 is provided with a catch member 36 which overlies each crossbar of the 'T' of the second member 34 when both the first and second members 32, 34 are in their respective first positions. When the first member 32 reaches its second position, catch member 36 no longer overlies the cross bar of the 'T' of the second member 34, enabling the potential energy stored by the helical spring 35 to be released, the depth of the cross bar of the 'T' now acting as another catch member 37 (in a similar manner to catch member 36) preventing movement of the first member 32 with its now stored potential energy in its helical spring 33.

The housing 27, 28 of each lock 20, 21 is integrally constructed from two linked parts, 27, 28, the first part 27, fitted to the front face of the container 14, houses the first member 32 and the second member 34, and the second part 28, made from steel, houses the latch 29, engaging member 23, and cylinder 30.

The arrangement between the two parts 27, 28 of the housing 27, 28, being such, that only the second part 28 of the housing 27, 28 moves relative to the fixed part 27, during complete engagement and disengagement of the pair of complementary engaging members 23, 24; 25, 26 of the lock 20, 21.

In the upper lock 20, the first part 27 of the housing 27, 28, is fitted with a first pivot 38 which is operatively connected to a second pivot 39 fitted to the other part 28 of the housing 27, 28 via respective ends of a connecting arm 40, such that rotation of one end of the connecting arm 40 about the first pivot 38, will cause the second pivot 39 at the other end of the connecting arm 40 to revolve around the first pivot 38 to separate the housing 27, 28 into its two parts 27, 28, during disengagement of the pair of complementary engaging members 23, 24, the second part 28 of the housing 27, 28, being free to rotate about the second pivot 39 when disengagement of the pair of complementary engaging members 23, 24 has taken place.

In the lower lock 21, the first part 27 and the second part 28 of the housing 27, 28 are connected together via a first pivot 38, and a second pivot 45 is connected to the second part 28 of the housing that is able to move relative to the first part 27 during engagement and disengagement of the pair of complementary engaging members 43, 44. The respective arrangement of the pivots 38, 45 is such that rotation about the first pivot 38 of the second part 28 of the housing 27, 28 that is able to move relative to the first part 27, causes the second pivot 45 to revolve around the first pivot 38 to separate the housing 27, 28 into its two parts 27, 28 during disengagement of the pair of complementary engaging members 43,44. The first complementary engaging member of a pair, 44 is fitted to the second part 28 of the housing 27, 28, via the second pivot 45, and is free to rotate about the second pivot 45, when the pair of complementary engaging members 43, 44 are disengaged.

In order to lock each part 27, 28 of the housing 27, 28 together, when for example, the container lid 17 is closed and locked to the container 14 and/or when the motorcycle case 11, is secured to the motorcycle case base plate 12, the first member 32 and the second part 28 of the housing 27, 28, are each provided with a complementary interlocking catch 41, 42. Together, these interlocking catches 41, 42 are able to lock the second part 28 of the housing 27, 28 to the first member 32, thus locking both parts 27, 28 of the housing 27, 28 together, even if the lock 20, 21 has been unlocked by the key 31.

However, when movement of the first member 32 from its first position to its second position occurs, interlocking catch 41, moves relative to interlocking catch 42, disengaging the pair, enabling the second part 28 of the housing 27, 28 to separate from the fixed part 27 of the housing 27, 28.

From the figures, it is clear that movement of the first member 32 is in a direction orthogonal to the direction of movement of the second member 34 and that movement of the second member 34 is such that it will strike the rear face of the second part 26 of the housing 27, 28, towards the base of the second part 28 in its intended attitude of operation. Such a movement will assist the second part 28 of the housing 27, 28, to break away from the first part 27, when the first member 32 moves from its first to its second position.

The pair of complementary engaging members, 23, 24; 25 26 in each lock 20,21 are visually different in design. In the upper lock 20, each engaging member 23, 24 of the pair, comprises an elongate "U' and an inverted elongate 'U' shape respectively, when seen in cross section, throughout their respective lengths. When engaged, the ''U' shapes interlock.

In the lower lock 21, the engaging member 26 fitted to the motorcycle case base plate 12, is an elongate cylindrical bar 43 and the engaging member 25 fitted to the lock 21 comprises a pair of elongate, overlying, parallel, spaced apart pivoting hooks 44. When engaged, the bar 43 and hooks 44 interlock.

The base 15 of the motorcycle case 11 has a raised frame rivetted to it. The frame has four taped slots, each adapted to receive a flange 46 on a stem connected to the base plate 12, each flange/slot pair, acting as complementary interlocking members to enable the motorcycle case 11 to be fitted to the base plate 12. Once the base plate 12 has been fitted to a motorcycle, the interlocking members interlock via a sliding action, once the widest parts of the tapered slots have been overlaid and dropped over the flanges 46. Once the sliding action has been completed, the motorcycle case can be locked in this position via the lower lock 21 and the use of the complementary engaging members 25, 26.

In operation, to unlock the motorcycle case 11, a two-stage double unlocking takes place.

Firstly, the key 31 is inserted into the cylinder 30 of the upper lock 20 and rotated through 90 degrees. This rotates the latch 29 from its first position to its second position. At this point, the motorcycle case remains locked through the action of the interlocking catches 41, 42.

Secondly, the first member 32 is then pushed vertically from its first position to its second position, and as it does so, interlocking catch 41, moves relative to interlocking catch 42, disengaging the pair of the interlocking catches 41, 42, enabling the second part 28 of the housing 27, 28 to separate from the fixed part 27 of the housing 27, 28.

When the first member 32 reaches its second position, catch member 36 no longer overlies the cross bar of the 'T' of the second member 34, enabling the potential energy stored by the helical spring 35 to be released, the depth of the cross bar of the 'T' now acting as a catch member 36 (in a similar manner to catch member 36) preventing movement of the first member 32 from its second position, back to its first position, with its now stored potential energy in its helical spring 33.

The conversion of the stored potential energy held in the helical spring 35 to kinetic energy enables the second member 34 to strike the internal rear face of the second part of the housing 28 with sufficient force to enable it to break away from the first part of the housing 27. At this point, the pair of complementary engaging members, 23, 24 in lock 20 are still engaged. Lifting the second member 34 away from the first member 32, causes the second pivot 39 at the other end of the connecting arm 40 to revolve around the first pivot 38 to completely separate the housing 27, 28 into its two parts 27, 28, disengaging the pair of complementary engaging members 23, 24, enabling the container lid 17 to be opened.

To 'double-lock' the motorcycle case 11, the pair of complementary engaging members, 23, 24 in lock 20 are firstly re-engaged and the second member 34 pushed downwardly towards the first member 32, causing the second pivot 39 at the other end of the connecting arm 40 to revolve back around the first pivot 38 to connect the separate parts of the housing 27, 28 back together again.

In so doing, this action pushes the rear face of the second part 26 of the housing 27, 28 against the catch member 36 (in the form of the cross bar of the 'T' of the second member 34) until it no longer acts as a catch member 36 enabling the potential energy stored by the helical spring 33 to be released, allowing movement of the first member 32 from its second, back to its first position, re-engaging the interlocking catches 41, 42. The key 31 is then reinserted into the cylinder 30 and rotated back though 90 degrees to move the latch 29 from its second back to its first position, preventing movement of the first member 32.

Operation of the second lock 21 is similar, the only difference being that the second part of the housing acts as the 'connecting arm' in the upper lock upon rotation, the location of the engaging member 26 fitted to the motorcycle case base plate 12, the pivoting arrangement of hooks 44 provided by the second pivot 45, is necessary to help in the engagement of the bar 43 and hooks 44 to lock the motorcycle case 11 to the engaging member 25 of the motorcycle case base plate 12.

## Claims

1. A motorcycle case (11) comprising:
a container (14) including a base (15) having one or more walls (16) upwardly extending therefrom, which terminate in an open top;
a container lid (17) to close the open top of the container (14), the lid (17) being moveable from a closed to an open position; and
a plurality of locks,
at least one lock (20) of the plurality of locks to lock the container lid (17) in the closed position, to the container (14); and
at least one lock (21) of the plurality of locks configured to operatively connect the motorcycle case (11) to a motorcycle, wherein at least one lock of the plurality of locks comprises:
a housing (27, 28) adapted to support the following components:
a latch (29) adapted to move from a first position to a second position, when a latch actuator is used to actuate the latch (29);
a first member (32) provided with biasing means, the first member (32) able to move from a first position to a second position, whereby potential energy is stored by the biasing means during movement of the first member (32) from the first position to the second position;
a second member (34) provided with biasing means, the second member (34) able to move from a first position to a second position, whereby potential energy is stored by the biasing means when the second member (34) is in the first position, and at least some of that stored potential energy is released as kinetic energy during movement of the second member (34) from the first position to the second position;
their arrangement being such that:
the latch (29), when in the first position, is able to restrict movement of the first member (32),
and when in the second position, movement of the first member (32) is no longer restricted; **characterised in that**
movement of the first member (32) from the first position to the second position enables the second member (34) to move from its first position to its second position and once in its second position, the second member (34) locks the first member (32) in its second position.

2. The motorcycle case (11) according to claim 1, wherein, each lock (20, 21) comprises a pair of complementary engaging members (23, 24, 43, 44), the first complementary engaging member of said pair, being operatively connected to the container (14), and the second complementary engaging member of said pair, being configured to be fitted to either the container lid (17), or directly or indirectly to, the motorcycle.

3. The motorcycle case (11) according to any one of the preceding claims, wherein the latch (29) is fitted to a key operable cylinder (30); and the latch actuator is a key (31), the latch (29) being adapted to move from the first position to the second position, when the key (31) is inserted into the key operable cylinder (30) and rotated about the longitudinal axis of the key operable cylinder (30).

4. The motorcycle case (11) according to any one of the preceding claims, wherein the latch (29) is located within the housing (27, 28) throughout its movement from its first to its second position.

5. The motorcycle case (11) according to any one of claims 3 to 4 when dependent on claim 2, wherein the housing (27, 28) comprises two parts, a first part (27), housing some of the components, and a second part (28), housing the remainder of the components, the arrangement between the two parts of the housing being such, that only one of the parts of the housing (27, 28) moves relative to the other during engagement and disengagement of the pair of complementary engaging members of the lock.

6. The motorcycle case (11) according to claim 5, wherein one of the parts of the housing (27, 28) is fitted with a first pivot (38) which is operatively connected to a second pivot (39) fitted to the other part of the housing (27, 28) via respective ends of a connecting arm (40), such that rotation of one end of the connecting arm (40) about the first pivot (38), causes the second pivot (39) at the other end of the connecting arm (40) to revolve around the first pivot (38) to separate the housing (27, 28) into its two parts during disengagement of the pair of complementary engaging members (43, 44).

7. The motorcycle case (11) according to claim 6, wherein the part of the housing (27, 28) fitted with the first pivot (38), is that part of the housing that is not able to move relative to the other during engagement and disengagement of the pair of complementary engaging members of the lock.

8. The motorcycle case (11) according to any one of claims 5 to 7, wherein the first complementary engaging member of said pair, is fitted to the part of the housing that moves relative to the other during engagement and disengagement of the pair of complementary engaging members of the lock to the container (14).

9. The motorcycle case (11) according to claim 5, wherein both of the parts of the housing (27, 28) are connected together via a first pivot (38), and a second pivot (39) is connected to that part of the housing (27, 28) that is able to move relative to the other, during engagement and disengagement of the pair of complementary engaging members (43, 44).

10. The motorcycle case (11) according to claim 9, wherein the first complementary engaging member of said pair, is fitted to that part of the housing that is able to move relative to the other via the second pivot (39).

11. The motorcycle case (11) according to claim 10, wherein the first complementary engaging member of said pair is free to rotate about the second pivot (39) when the pair of complementary engaging members (43, 44) are disengaged.

12. The motorcycle case (11) according to any one of claims 5 to 11, wherein the first member (32) is located in that part of the housing that is not able to move.

13. The motorcycle case (11) according to any one of claims 7 to 12, wherein the part of the housing (27, 28) that is able to move relative to the part of the housing that is not able to move, and the first member (32), are each provided with a complementary interlocking catch (41, 42), able to lock both parts of the housing (27, 28) together, preferably, when the pair of complementary engaging members of the lock are engaged.

14. The motorcycle case (11) according to claim 13, wherein movement of the first member (32) from its first position to its second position will disengage the complementary interlocking catches, enabling the part of the housing (27, 28) that is able to move relative to the part of the housing (27, 28) that is not able to move, to move.

15. A locking system, comprising:
a motorcycle case base plate (12) mountable to a motorcycle; and
a motorcycle case (11) as claimed in any one of the preceding claims.

## Patentansprüche

1. Motorradkoffer (11), umfassend:
einen Behälter (14), der eine Basis (15) mit einer oder mehreren Wänden (16) beinhaltet, die sich davon nach oben erstrecken und die in einer offenen Oberseite enden;
einen Behälterdeckel (17), um die offene Oberseite des Behälters (14) zu schließen, wobei der Deckel (17) von einer geschlossenen zu einer offenen Position bewegbar ist; und
eine Vielzahl von Verriegelungen,
wobei zumindest eine Verriegelung (20) aus der Vielzahl von Verriegelungen den Behälterdeckel (17) in der geschlossenen Position an dem Behälter (14) verriegelt; und
zumindest eine Verriegelung (21) aus der Vielzahl von Verriegelungen dazu konfiguriert ist, den Motorradkoffer (11) operativ mit einem Motorrad zu verbinden, wobei zumindest eine Verriegelung aus der Vielzahl von Verriegelungen Folgendes umfasst:
ein Gehäuse (27, 28), das dazu ausgelegt ist, die folgenden Komponenten zu stützen:
einen Riegel (29), der dazu ausgelegt ist, sich von einer ersten Position zu einer zweiten Position zu bewegen, wenn ein Riegelaktor verwendet wird, um den Riegel (29) zu betätigen;
ein erstes Element (32), das mit Vorspannmitteln bereitgestellt ist, wobei das erste Element (32) in der Lage ist, sich von einer ersten Position zu einer zweiten Position zu bewegen, wodurch potentielle Energie durch die Vorspannmittel während Bewegung des ersten Elements (32) von der ersten Position zu der zweiten Position gespeichert wird;
ein zweites Element (34), das mit Vorspannmitteln bereitgestellt ist, wobei das zweite Element (34) in der Lage ist, sich von einer ersten Position zu einer zweiten Position zu bewegen, wodurch potentielle Energie durch die Vorspannmittel gespeichert wird, wenn das zweite Element (34) in der ersten Position ist, und zumindest etwas dieser gespeicherten potentiellen Energie als kinetische Energie während Bewegung des zweiten Elements (34) von der ersten Position zu der zweiten Position freigesetzt wird;
wobei ihre Anordnung derart ist, dass:
der Riegel (29), wenn er in der ersten Position ist, in der Lage ist, Bewegung des ersten Elements (32) zu beschränken,
und wenn er in der zweiten Position ist, Bewegung des ersten Elements (32) nicht mehr beschränkt ist; **dadurch gekennzeichnet, dass**
Bewegung des ersten Elements (32) von der ersten Position zu der zweiten Position dem zweiten Element (34) ermöglicht, sich von seiner ersten Position zu seiner zweiten Position zu bewegen, und sobald es in seiner zweiten Position ist, das zweite Element (34) das erste Element (32) in seiner zweiten Position verriegelt.

2. Motorradkoffer (11) nach Anspruch 1, wobei jede Verriegelung (20, 21) ein Paar komplementärer Eingriffselemente (23, 24, 43, 44) umfasst, wobei das erste komplementäre Eingriffselement des Paares operativ mit dem Behälter (14) verbunden ist und das zweite komplementäre Eingriffselement des Paares dazu konfiguriert ist, entweder an dem Behälterdeckel (17) oder direkt oder indirekt an dem Motorrad angebracht zu werden.

3. Motorradkoffer (11) nach einem der vorhergehenden Ansprüche, wobei der Riegel (29) an einem schlüsselbetätigbaren Zylinder (30) angebracht ist; und der Riegelaktor ein Schlüssel (31) ist, wobei der Riegel (29) dazu ausgelegt ist, sich von der ersten Position zu der zweiten Position zu bewegen, wenn der Schlüssel (31) in den schlüsselbetätigbaren Zylinder (30) eingeführt und um die Längsachse des schlüsselbetätigbaren Zylinders (30) gedreht wird.

4. Motorradkoffer (11) nach einem der vorhergehenden Ansprüche, wobei sich der Riegel (29) während seiner Bewegung von seiner ersten zu seiner zweiten Position innerhalb des Gehäuses (27, 28) befindet.

5. Motorradkoffer (11) nach einem der Ansprüche 3 bis 4, wenn abhängig von Anspruch 2, wobei das Gehäuse (27, 28) zwei Teile umfasst, einen ersten Teil (27), der einige der Komponenten aufnimmt, und einen zweiten Teil (28), der den Rest der Komponenten aufnimmt, wobei die Anordnung zwischen den zwei Teilen des Gehäuses derart ist, dass sich nur einer der Teile des Gehäuses (27, 28) relativ zu dem anderen während Eingriff und Lösen des Paares komplementärer Eingriffselemente der Verriegelung bewegt.

6. Motorradkoffer (11) nach Anspruch 5, wobei an einem der Teile des Gehäuses (27, 28) ein erster Drehpunkt (38) angebracht ist, der operativ mit einem zweiten Drehpunkt (39) verbunden ist, der an dem anderen Teil des Gehäuses (27, 28) über jeweilige Enden eines Verbindungsarms (40) angebracht ist, sodass Drehung von einem Ende des Verbindungsarms (40) um den ersten Drehpunkt (38) bewirkt, dass der zweite Drehpunkt (39) an dem anderen Ende des Verbindungsarms (40) um den ersten Drehpunkt (38) läuft, um das Gehäuse (27, 28) während Lösen des Paares komplementärer Eingriffselemente (43, 44) in seine zwei Teile zu trennen.

7. Motorradkoffer (11) nach Anspruch 6, wobei der Teil des Gehäuses (27, 28), an dem der erste Drehpunkt (38) angebracht ist, der Teil des Gehäuses ist, der nicht in der Lage ist, sich relativ zu dem anderen während Eingriff und Lösen des Paares komplementärer Eingriffselemente der Verriegelung zu bewegen.

8. Motorradkoffer (11) nach einem der Ansprüche 5 bis 7, wobei das erste komplementäre Eingriffselement des Paares an dem Teil des Gehäuses angebracht ist, der sich relativ zu dem anderen während Eingriff und Lösen des Paares komplementärer Eingriffselemente der Verriegelung an dem Behälter (14) bewegt.

9. Motorradkoffer (11) nach Anspruch 5, wobei beide der Teile des Gehäuses (27, 28) über einen ersten Drehpunkt (38) miteinander verbunden sind und ein zweiter Drehpunkt (39) mit dem Teil des Gehäuses (27, 28) verbunden ist, der in der Lage ist, sich relativ zu dem anderen während Eingriff und Lösen des Paares komplementärer Eingriffselemente (43, 44) zu bewegen.

10. Motorradkoffer (11) nach Anspruch 9, wobei das erste komplementäre Eingriffselement des Paares an dem Teil des Gehäuses angebracht ist, der in der Lage ist, sich über den zweiten Drehpunkt (39) relativ zu dem anderen zu bewegen.

11. Motorradkoffer (11) nach Anspruch 10, wobei das erste komplementäre Eingriffselement des Paares frei ist, sich um den zweiten Drehpunkt (39) zu drehen, wenn das Paar komplementärer Eingriffselemente (43, 44) gelöst ist.

12. Motorradkoffer (11) nach einem der Ansprüche 5 bis 11, wobei sich das erste Element (32) in dem Teil des Gehäuses befindet, der nicht in der Lage ist, sich zu bewegen.

13. Motorradkoffer (11) nach einem der Ansprüche 7 bis 12, wobei der Teil des Gehäuses (27, 28), der in der Lage ist, sich relativ zu dem Teil des Gehäuses zu bewegen, der nicht in der Lage ist, sich zu bewegen, und das erste Element (32) jeweils mit einer komplementären Ineinanderverriegelungsraste (41, 42) bereitgestellt sind, die in der Lage ist, beide Teile des Gehäuses (27, 28) miteinander zu verriegeln, bevorzugt wenn das Paar komplementärer Eingriffselemente der Verriegelung eingegriffen ist.

14. Motorradkoffer (11) nach Anspruch 13, wobei Bewegung des ersten Elements (32) von seiner ersten Position zu seiner zweiten Position die komplementären Ineinanderverriegelungsrasten löst, wodurch dem Teil des Gehäuses (27, 28), der in der Lage ist, sich relativ zu dem Teil des Gehäuses (27, 28) zu bewegen, der nicht in der Lage ist, sich zu bewegen, ermöglicht wird, sich zu bewegen.

15. Verriegelungssystem, umfassend:
eine Motorradkofferbasisplatte (12), die an einem Motorrad montierbar ist; und
einen Motorradkoffer (11) nach einem der vorhergehenden Ansprüche.

## Revendications

1. Coffre de motocyclette (11) comprenant :
un contenant (14) comprenant une base (15) possédant une ou plusieurs parois (16) s'étendant vers le haut à partir de celle-ci, qui se terminent par une partie supérieure ouverte ;
un couvercle de contenant (17) destiné à fermer la partie supérieure ouverte du contenant (14), le couvercle (17) pouvant être déplacé d'une position fermée à une position ouverte ; et
une pluralité de verrous,
au moins un verrou (20) de la pluralité de verrous étant destiné à verrouiller le couvercle de contenant (17) dans la position fermée, au contenant (14) ; et
au moins un verrou (21) de la pluralité de verrous étant conçu pour raccorder fonctionnellement le coffre de motocyclette (11) à une motocyclette, au moins un verrou de la pluralité de verrous comprenant :
un boîtier (27, 28) adapté pour supporter les composants suivants :
un loquet (29) adapté au déplacement d'une première position à une seconde position, lorsqu'un actionneur de loquet est utilisé pour actionner le loquet (29) ;
un premier élément (32) pourvu d'un moyen de sollicitation, le premier élément (32) pouvant se déplacer d'une première position à une seconde position, moyennant quoi l'énergie potentielle est stockée par le moyen de sollicitation pendant le déplacement du premier élément (32) de la première position à la seconde position ;
un second élément (34) pourvu d'un moyen de sollicitation, le second élément (34) pouvant se déplacer d'une première position à une seconde position, moyennant quoi l'énergie potentielle est stockée par le moyen de sollicitation lorsque le second élément (34) se trouve dans la première position, et au moins une partie de cette énergie potentielle stockée est libérée sous forme d'énergie cinétique pendant le déplacement du second élément (34) de la première position à la seconde position ;
l'agencement étant tel que :
le loquet (29), lorsqu'il se trouve dans la première position, peut restreindre le déplacement du premier élément (32),
et lorsqu'il se trouve dans la seconde position, le déplacement du premier élément (32) n'est plus limité ; **caractérisé en ce que**
le déplacement du premier élément (32) de la première position à la seconde position permet au second élément (34) de se déplacer de sa première position à sa seconde position et une fois dans sa seconde position, le second élément (34) verrouille le premier élément (32) dans sa seconde position.

2. Coffre de motocyclette (11) selon la revendication 1, chaque verrou (20, 21) comprenant une paire d'éléments de mise en prise complémentaires (23, 24, 43, 44), ledit premier élément de mise en prise complémentaire de ladite paire, étant raccordé de manière fonctionnelle au contenant (14), et ledit second élément de mise en prise complémentaire de ladite paire, étant conçu pour être adapté soit au couvercle de contenant (17), soit directement ou indirectement à la motocyclette.

3. Coffre de motocyclette (11) selon l'une quelconque des revendications précédentes, ledit loquet (29) étant adapté à un cylindre actionnable par clé (30) ; et ledit actionneur de loquet étant une clé (31), le loquet (29) étant adapté à un déplacement de la première position à la seconde position, lorsque la clé (31) est insérée dans le cylindre actionnable par clé (30) et tournée autour de l'axe longitudinal du cylindre actionnable par clé (30).

4. Coffre de motocyclette (11) selon l'une quelconque des revendications précédentes, ledit loquet (29) étant situé à l'intérieur du boîtier (27, 28) tout au long de son déplacement de sa première à sa seconde position.

5. Coffre de motocyclette (11) selon l'une quelconque des revendications 3 à 4 lorsqu'elles dépendent de la revendication 2, ledit boîtier (27, 28) comprenant deux parties, une première partie (27), logeant certains des composants, et une seconde partie (28), logeant le reste des composants, ledit agencement entre les deux parties du boîtier étant tel que seule l'une des parties du boîtier (27, 28) se déplace par rapport à l'autre partie pendant la mise en prise et la mise hors prise de la paire d'éléments de mise en prise complémentaires du verrou.

6. Coffre de motocyclette (11) selon la revendication 5, l'une desdites parties du boîtier (27, 28) étant équipée d'un premier pivot (38) qui est raccordé de manière fonctionnelle à un second pivot (39) adapté à l'autre partie du boîtier (27, 28) par l'intermédiaire des extrémités respectives d'un bras de raccordement (40), de sorte que la rotation d'une extrémité du bras de raccordement (40) autour du premier pivot (38), amène le second pivot (39) au niveau de l'autre extrémité du bras de raccordement (40) à tourner autour du premier pivot (38) de manière à séparer le boîtier (27, 28) en ses deux parties pendant la mise hors prise de la paire d'éléments de mise en prise complémentaires (43, 44).

7. Coffre de motocyclette (11) selon la revendication 6, ladite partie du boîtier (27, 28) équipée du premier pivot (38) étant la partie du boîtier qui ne peut pas se déplacer par rapport à l'autre partie pendant la mise en prise et la mise hors prise de la paire d'éléments de mise en prise complémentaires du verrou.

8. Coffre de motocyclette (11) selon l'une quelconque des revendications 5 à 7, ledit premier élément de mise en prise complémentaire de ladite paire étant adapté à la partie du boîtier qui se déplace par rapport à l'autre partie pendant la mise en prise et la mise hors prise de la paire d'éléments de mise en prise complémentaires du verrou avec le contenant (14).

9. Coffre de motocyclette (11) selon la revendication 5, les deux parties du boîtier (27, 28) étant raccordées ensemble par l'intermédiaire d'un premier pivot (38), et un second pivot (39) étant raccordé à la partie du boîtier (27, 28) qui peut se déplacer par rapport à l' autre partie, pendant la mise en prise et la mise hors prise de la paire d'éléments de mise en prise complémentaires (43, 44).

10. Coffre de motocyclette (11) selon la revendication 9, ledit premier élément de mise en prise complémentaire de ladite paire étant adapté à la partie du boîtier qui peut se déplacer par rapport à l'autre partie par l'intermédiaire du second pivot (39).

11. Coffre de motocyclette (11) selon la revendication 10, ledit premier élément de mise en prise complémentaire de ladite paire étant libre de tourner autour du second pivot (39) lorsque la paire d'éléments de mise en prise complémentaires (43, 44) est mise hors prise.

12. Coffre de motocyclette (11) selon l'une quelconque des revendications 5 à 11, ledit premier élément (32) étant situé dans la partie du boîtier qui ne peut pas se déplacer.

13. Coffre de motocyclette (11) selon l'une quelconque des revendications 7 à 12, ladite partie du boîtier (27, 28) qui peut se déplacer par rapport à la partie du boîtier qui ne peut pas se déplacer, et ledit premier élément (32), étant chacun munis d'un cliquet de verrouillage complémentaire (41, 42), pouvant verrouiller les deux parties du boîtier (27, 28) ensemble, de préférence, lorsque la paire d'éléments de mise en prise complémentaires du verrou est mise en prise.

14. Coffre de motocyclette (11) selon la revendication 13, ledit mouvement du premier élément (32) de sa première position à sa seconde position mettant hors prise les cliquets de verrouillage complémentaires, permettant à la partie du boîtier (27, 28) qui peut se déplacer par rapport à la partie du boîtier (27, 28) qui ne peut pas se déplacer, de se déplacer.

15. Système de verrouillage, comprenant :
une plaque de base de coffre de motocyclette (12) pouvant être montée sur une motocyclette ; et
un coffre de motocyclette (11) selon l'une quelconque des revendications précédentes.
